Europäisches Patentamt

European Patent Office

Office européen des brevets

(19)

(11) Veröffentlichungsnummer: **0 240 851**

**A2**

# (12) EUROPÄISCHE PATENTANMELDUNG

(21) Anmeldenummer: 87104444.2

(22) Anmeldetag: 25.03.87

(51) Int. Cl.⁴: **F16L 55/12**

(30) Priorität: **29.03.86 DE 3610624**

(43) Veröffentlichungstag der Anmeldung:
**14.10.87 Patentblatt 87/42**

(84) Benannte Vertragsstaaten:
**DE FR GB IT NL SE**

(71) Anmelder: **Siemens Aktiengesellschaft Berlin und München**
**Wittelsbacherplatz 2**
**D-8000 München 2(DE)**

(72) Erfinder: **Weber, Robert**
**Esperstrasse 23**
**D-8525 Uttenreuth(DE)**
Erfinder: **Naess, Ludvig**
**Mostmyra 3a**
**N-7075 Tiller(NO)**
Erfinder: **v. Johansen, Trond, Dr.**
**Ole Nordgaards vei 78**
**N-7000 Trondheim(NO)**
Erfinder: **Ruch, Ola, Dipl.-Ing.**
**Oevreflataasun 32**
**N-7079 Flataasen(NO)**

(54) **Vorrichtung zum Verschliessen einer Rohrleitung.**

(57) Ein in die Rohrleitung (5) einsetzbarer Hohlzylinder (1) ist mit einer radial verstellbaren Ringdichtung (3) sowie mit radial verstellbaren Kolben (2) versehen. Zur radialen Verstellung sind Betätigungsmittel vorgesehen, welche die Ringdichtung (3) und/oder Kolben (2) oder die Ringdichtung (3) und von den Kolben (2) betätigte Halteelemente (10, 11) entweder in eine ausgefahrene Stellung bringen, in der sie gegen die Innenwand der Rohrleitung (5) gedrückt werden und dadurch den Hohlzylinder (1) gegen eine axiale Bewegung sichern oder in eine eingezogene Lage bewegen, in der die Ringdichtung (3) und Kolben (2) oder Halteelemente (10, 11) von der Rohrleitung (5) gelöst sind.

FIG 1

EP 0 240 851 A2

## Vorrichtung zum Verschließen einer Rohrleitung

Die Erfindung bezieht sich auf eine Vorrichtung zum Verschließen einer Rohrleitung.

Wenn Rohrleitungen, die auf dem Meeresgrund verlegt sind und Erdgas führen, in der Nähe einer Bohrinsel oder Plattform brechen, so strömt in Folge des hohen Gasdruckes in der Rohrleitung lange Zeit Gas aus, · auch wenn durch betriebstechnische Maßnahmen die Förderung - schnell unterbrochen wird. Kommt es zur Entzündung des Gases, so ist die Insel und deren Besatzung stark gefährdet.

Aus der DE-C 31 42 768 ist es bekannt, in Rohrleitungen, die brennbares Gas führen bei einem Rohrbruch oder Leck Absperrvorrichtungen einzuführen, die den Mediumfluß unterbinden und dadurch die Schadensauswirkung gering halten. Die bekannte Verschlußvorrichtung besteht aus einem zylindrischen Abschnitt, der stirnseitig durch zwei Flansche, außen durch die Rohrleitungswand und innen durch einen die beiden Flansche verbindenden Zylinder begrenzt ist. In dem hohlzylindrischen Abschnitt ist ein aufblasbares Element mit ringförmigem Querschnitt (Gummiblase) angeordnet. ALs radiale äußere Abdichtung dient eine vom aufblasbaren Element unabhängige zylindrische Hülse, die aus nachgiebigem Material besteht. Diese zylindrische Hülse erstreckt sich über die Länge des hohlzylindrischen Abschnitts und ist an beiden Enden durch die Flansche an Ort und Stelle gehalten. Diese bekannte Verschlußvorrichtung, die an den Stirnseiten je eine Ringdichtung trägt, wird im Störungsfall, also wenn ein Leck in einer Rohrleitung auftritt, nach Art eines Kolbens durch den Druck des Leitungsmediums durch die Rohrleitung geschwemmt. In der Nähe der Leckstelle wird die Verschlußvorrichtung in der Rohrleitung arretiert. Hierzu werden mittels Fernzündung Preßgasflaschen, die innerhalb des Hohlzylinders angeordnet sind, geöffnet, und Gas in die Gummiblase eingeleitet, so daß sich die äußere zylindrische Hülse an die Rohrwand legt und die Verschlußvorrichtung in der Rohrleitung festgebremst wird. Dadurch gelangt kein weiteres Medium mehr zu der Leckstelle. Die bekannte Verschlußvorrichtung kann zwar große Haltekräfte innerhalb der Rohrleitung aufbringen, doch falls Undichtigkeiten im aufblasbaren Element auftreten, ist es nicht mehr möglich, den zum Halten der Verschlußvorrichtung erforderlichen Anpreßdruck zu erzeugen.

Der Erfindung liegt die Aufgabe zugrunde, eine Vorrichtung zum Verschließen einer Rohrleitung anzugeben, bei der Anpreßkräfte für eine sehr lange Zeit gewährleistet werden können.

Diese Aufgabe wird erfindungsgemäß durch eine Vorrichtung zum Verschließen einer Rohrleitung gelöst, bei der ein in diese einsetzbarer Hohlzylinder mit einer radial verstellbaren Ringdichtung sowie mit radial verstellbaren Kolben versehen ist und zur radialen Verstellung Betätigungsmittel vorgesehen sind, welche die Ringdichtung und/oder Kolben oder die Ringdichtung und von den Kolben betätigte Halteelemente entweder in eine ausgefahrene Stellung bringen, in der sie gegen die Innenwand der Rohrleitung gedrückt werden und dadurch den Hohlzylinder gegen eine axiale Bewegung sichern oder in eine eingezogene Lage bewegen, in der die Ringdichtung und Kolben oder Halteelemente von der Rohrleitung gelöst sind.

Als Betätigungsmittel für die Ringdichtung, die Kolben und Klinken können an sich bekannte Druckmittel in Druckspeichern dienen, die Druckmittel durch chemische Reaktion freisetzen oder Druckmittel in Preßgasflaschen eingesetzt werden.

Besonders vorteilhaft ist es, in dem zylindrischen Körper der Verschlußvorrichtung eine Vielzahl von radial angeordneten Zylindern mit Kolben vorzusehen und das Innere des Hohlzylinders für das Rohrleitungsmedium als Durchströmkanal auszubilden, in dem ein von einer Steuereinrichtung betätigbarer Ventilkegel oder ein bei Überschreiten der betrieblichen Durchströmgeschwindigkeit selbsttätig schließbarer Ventilkegel angeordnet ist. Auf diese Weise kann die Absperrvorrichtung bereits vor dem Auftreten eines Lecks in die Rohrleitung eingesetzt und im Schadensfall unverzüglich aktiviert werden. Dabei können die Rohrleitungen in einem gewissen Abstand von einer Bohrinsel bzw. Plattform mit Absperrvorrichtungen ausgerüstet werden. Der Abstand wird so bemessen, daß bei einem Bruch der Rohrleitung zwischen der Insel bzw. Plattform und den Absperrvorrichtungen die Ausgasmenge und damit die Schadensauswirkung gering ist. In diesem Fall verhindert das geschlossene Absperrventil das Ausgasen der oft mehr als 100 km langen, unter hohem Druck stehenden Rohrleitung, bis der Druck durch Entlastungsmaßnahmen von der Nachbarinsel her abgebaut ist.

Beim Einsatz herkömmlicher, von außen bedienbarer Armaturen als Sicherheitsabsperrung müßten vorsorglich eventuell jedes Jahr Inspektions-und Austauschmaßnahmen vorgesehen werden, wie z.B. Verschleißteile besichtigt und gealterte Kunststoffelemente ausgetauscht werden. Mit Tauchern wäre diese Aufgabe sehr schwer durchführbar, da die große Tauchtiefe in physischer Hinsicht ihre Zeit fordert. Auch sind die Komponentenexperten nicht immer in der Lage, Tauchunternehmungen durchzuführen. Demgegenüber hat die erfindungsgemäße Absperrvorrichtung den Vorteil, daß sie zum Zweck der Inspektion und Wartung aus der Rohrleitung herausgefahren werden kann.

In vorteilhafter Weise ist der Durchströmkanal des Hohlzylinders mit den Zylindern verbunden, und die Ringdichtung im Ringspalt ist an der dem Druck zugewandten Seite des Hohlzylinders angeordnet, während der Ventilkegel sich an der dem Druck abgewandten Seite des Hohlzylinders befindet. Dadurch werden die Zylinder mit Leitungsmedium beaufschlagt, so daß der jeweilige Differenzdruck auf die Kolben einwirkt. Auf diese Weise können besondere Druckspeicher zum Beaufschlagen der Kolben entfallen. Dadurch ergibt sich eine wesentliche Vereinfachung im Aufbau und das Innere des Hohlzylinders kann zur Gänze als Durchströmkanal genutzt werden.

Weitere vorteilhafte Ausgestaltungen der Erfindung sind in den Unteransprüchen 4 bis 10 angegeben.

Anhand der schematischen Zeichnungen wird die Erfindung im folgenden näher erläutert. Es zeigt:

Fig. 1 eine Verschlußvorrichtung im Schnitt,

Fig. 2 einen Querschnitt zu Fig. 1,

Fig. 3 eine Verschlußvorrichtung mit Stufenkolben,

Fig. 4 einen Kolben mit Kraftverstärkung,

Fig. 5 eine Verschlußvorrichtung mit Bremskufen,

Fig. 6 einen Teil einer Verschlußvorrichtung mit Bremsbacken,

Fig. 7 einen Kolben mit Austellfeder und Betätigungsstange,

Fig. 8 einen Längsschnitt eines Teiles einer Verschlußvorrichtung mit Kolbenrückzugstangen,

Fig. 9 einen Teil einer Verschlußvorrichtung mit Rückzugstange für Bremsbacken,

Fig. 10 einen Teilquerschnitt einer Verschlußvorrichtung gemäß Fig. 11, mit kraftschlüssiger Verbindung zwischen Kolben und Rohrwand,

Fig. 11 einen Teilschnitt einer Verschlußvorrichtung mit Rückzugfeder für den Kolben und Rückzugstange für die Radialdichtung und

Fig. 12 eine Verschlußvorrichtung, bei der ein Teil der Kolben in Radialnuten der Rohrleitung eingreift.

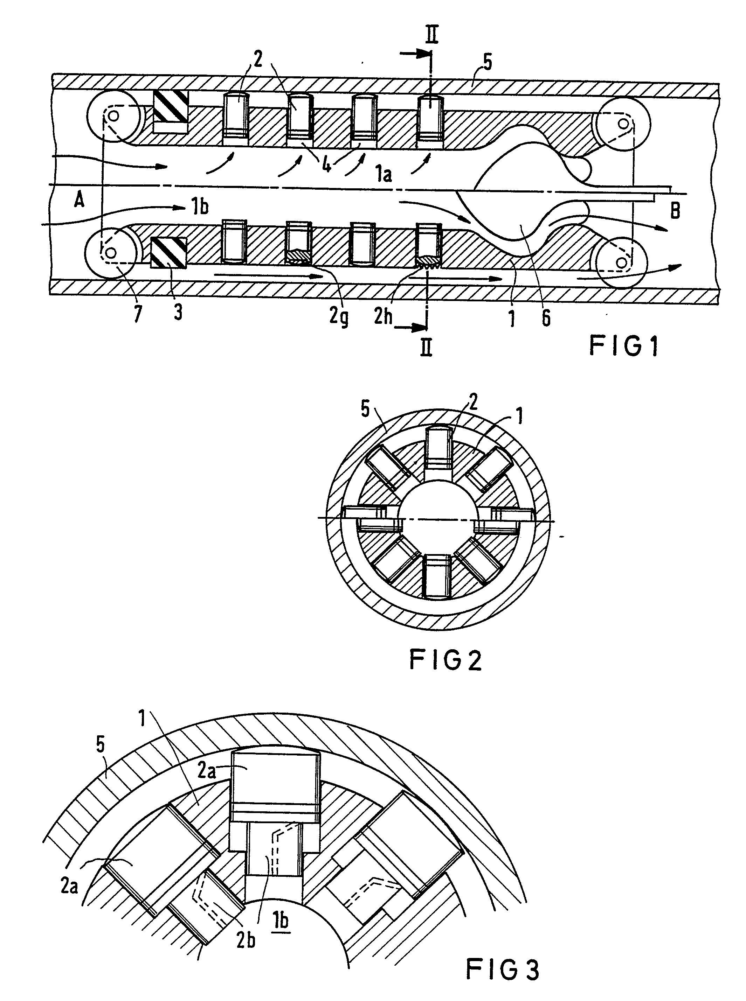

Bei der in Fig. 1 und Fig. 2 dargestellten Absperrvorrichtung zeigt die obere Schnitthälfte die Absperposition und die untere Schnitthälfte die Transportstellung. Ein an beiden Enden offener Zylinder 1, der kleiner ist als der Innendurchmesser des Rohres 5 ist mit einer Vielzahl von radial verstellbaren Kolben 2 sowie mit einer radial beweglichen Ringdichtung 3 versehen, die den Ringspalt zwischen Rohrinnendurchmesser und dem Hohlzylinder 1 abdichtet. Die Ringdichtung 3 und die Kolben 2 können entweder durch weiter unten erwähnte Mittel in die gezeigte ausgefahrene Stellung gebracht werden, in der sie gegen die Innenwand der Rohrleitung 5 gedrückt werden und dadurch den Hohlzylinder 1 gegen eine axiale Bewegung sichern oder in eine eingezogene Lage bewegt werden, in der die Ringdichtung 3 und die Kolben 2 von der Rohrleitung 5 gelöst sind, so daß die Verschlußvorrichtung in der Rohrleitung bewegt werden kann. Das Innere des Hohlzylinders 1 ist für das Rohrleitungsmedium als Durchströmkanal ausgebildet, in dem ein Ventilkegel 6 angeordnet ist. Dieser Ventilkegel ist von einer Steuereinrichtung fernbedienbar oder selbsttätig schließend ausgebildet.

Im Bereich der Plattform bzw. Bohrinsel ist eine Inspektionsöffnung an einer zugänglichen Stelle der Rohrleitung vorgesehen, die das Einführen und die Entnahme der mit Rädern 7 versehenen Verschlußvorrichtung gestattet. Zum Befahren des Rohrinnenbereiches sind entweder die Räder 7 mit Antrieben ausgerüstet oder der Verschlußvorrichtung wird ein Transportfahrzeug zugeordnet, das sich fernbedient an die Verschlußvorrichtung ankuppeln oder entkuppeln läßt. Auf dem Transportfahrzeug können auch Einrichtungen zum Betätigen des Ventilkegels 6, zum Ausfahren und Zurückziehen der Ringdichtung 3, zum Lösen der Kolben 2 und dergleichen vorgesehen sein.

Beim Ein- und Ausbauvorgang der Verschlußvorrichtung sind die Kolben 2 und die Ringdichtung 3 auf kleinstem Durchmesser eingezogen. Nach dem Einbringen der Verschlußvorrichtung in die Rohrleitung 5 wird sie in einem vorgegebenen Abstand von der Bohrinsel bzw. der Plattform am Ende des Nahbereiches durch Ausfahren der Ringdichtung 3 und der Kolben 2 bei geöffnetem Ventilkegel 6 in der Rohrleitung arretiert. Im ungestörten Betrieb kann die Verschlußvorrichtung von beiden Seiten her durchströmt werden, je nachdem, ob der Gasfluß zur Insel bzw. Plattform strömt oder von dieser kommt (Ex- und Importleitung). Bei einem Rohrbruch im Nahbereich der Insel bzw. Plattform muß die Verschlußvorrichtung eine Strömung zur Insel hin verhindern. Dies wird durch Schließen des Ventilkegels 6 erreicht. Im geschlossenen Zustand der Verschlußvorrichtung muß die radiale Anpreßkraft der Halteelemente an die Rohrwand größer sein als im ungestörten Betrieb. Dabei entsteht jedoch das Problem, daß sich in den meisten Fällen diese Radialkräfte nicht mit den Kräften aus dem Gasdruck überlagern dürfen, da sonst die Rohrwand überbeansprucht wird. Zur Vermeidung einer solchen Überbeanspruchung ist gemäß einer weiteren Ausgestaltung der Erfindung der Durchströmkanal 1a mit den Zylindern 4 verbunden und die Verschlußvorrichtung ist in der Rohrleitung 5 derart angeordnet, daß die Ringdichtung 3 im Ringspalt an der dem Druck zugewandten Seite A des Hohlzylinders 1 liegt, während sich der Ventilkegel 6 an dem Druck abgewandten Seite B des Hohlzylinders 1 befindet. Auf diese Weise wird zur Aktivierung der Kolben 2 der Druckunterschied vor und nach dem Ventilkegel 6 ausgenutzt, wobei sich die Anpreßkraft der Kolben 2 mit steigender Druckdifferenz erhöht. Diese Druckdifferenz wird bei Auftreten eines Lecks größer, da dann der Druck auf der Niederdruckseite fällt. Die Belastung des Rohres 5 bleibt aber ungefähr gleich.

Um bei kleinen Radialkräften große Haltekräfte zu erzeugen ist es vorteilhaft, die Köpfe der Kolben 2 mit einer Oberfläche zu versehen, die einen hohen Reibwert aufweisen. Beispielsweise kann ein Bremsbelag 2g in eine Aussparung des Kolbenkopfes eingeklebt werden oder es kann eine verschleißfeste Schicht 2h auf den Kolbenkopf aufplattiert werden, die eine konzentrische Riffelung oder eine Feilenschlagriffelung aufweist.

Um eine möglichst große Kolbenfläche mit dem Gasdruck beaufschlagen zu können, ist es vorteilhaft, Stufenkolben 2a, 2b, die sich zum Zentrum der Verschlußvorrichtung 1 hin verjüngen, einzusetzen (Fig. 3).

Da die Kolbenflächen einerseits durch konstruktive Grenzen eine bestimmte Größe nicht übersteigen können und andererseits der Differenzdruck einen festen Maximalwert bringt, müßte man bei großen Rohrdurchmessern und damit erhöhter Verschiebekraft oder bei Verringerung des Reibwertes die Anzahl der Kolben erhöhen, was zu einer Verlängerung der Verschlußvorrichtung führen würde. Dies kann dadurch vermieden werden, daß in die Kolben entweder bei allen oder nur bei einem Teil derselben mechanische Kraftverstärker eingebaut werden. Besonders dann, wenn lange Kolbenhübe zur Verfügung stehen, wie dies bei größeren Rohrdurchmessern der Fall ist, lassen sich diese Kraftverstärkungen vorteilhaft anwenden.

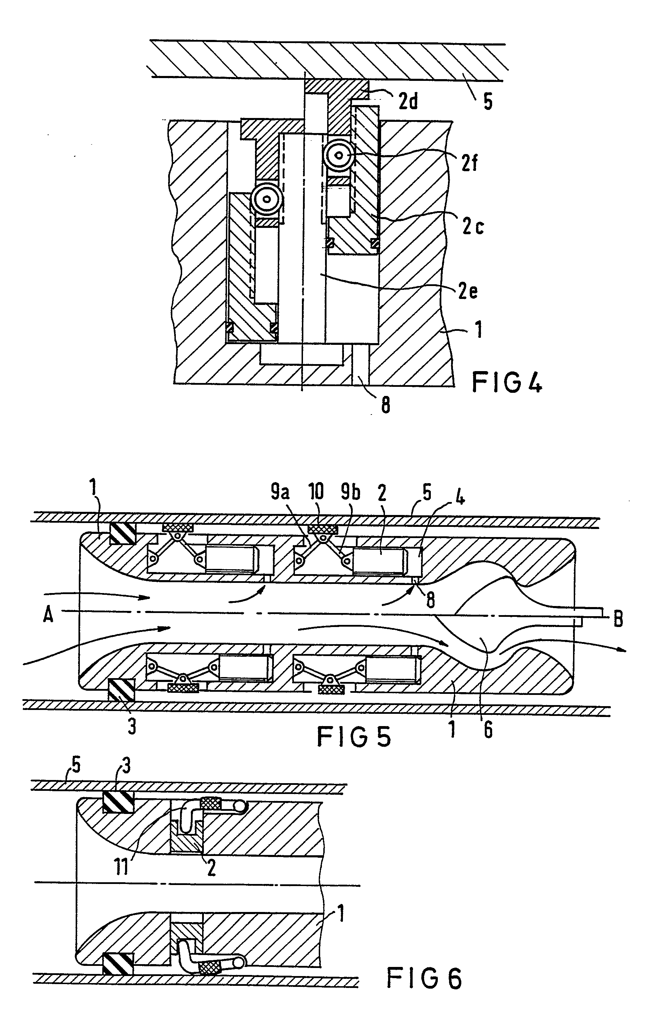

In Fig. 4 ist ein derartiger Kraftverstärker dargestellt, der nach dem Prinzip "Kraft × Weg = konstant" arbeitet. Die linke Schnitthälfte zeigt die Kolbenanordnung in der eingefahrenen und die rechte Schnitthälfte in der ausgefahrenen Lage. Dabei nimmt der druckbeaufschlagte äußere Primärkolben 2c, der über eine Bohrung 8 mit Strömungsmittel vom Durchströmkanal 1a her beaufschlagt ist, beim Hubvorgang den inneren Sekundärkolben 2d mit der halben Geschwindigkeit mit. Diese mechanische Kraftübersetzung ermöglicht ein Basisanker 2e mit Verzahnung, in die eine Zahnwalze 2f eingreift, welche am Sekundärkolben 2d gelagert ist, wobei die Zahnwalze 2f in einer Innenverzahnung des Primärkolbens 2c abrollt.

Eine andere Möglichkeit, verstärkte Anpreßkräfte zu erhalten, ist in Fig. 5 dargestellt. Dort sind die Kolben in Zylindern angeordnet, die in Längsrichtung des Hohlzylinders 1 verlaufen. Dabei liegen mehrere Kolbeneinheiten hintereinander. Jeder Kolben 2 drückt auf ein aus zwei Hebeln 9a, 9b gebildetes Übersetzungsgestänge, das im Verbindungspunkt der beiden Hebel 9a, 9b einen Bremsbacken 10 trägt. Die Bremsbacken 10 bewirken dann das Anpressen an die Wand des Rohres 5 (obere Schnitthälfte). Zum Beaufschlagen der Kolben 2 wird auch in diesem Fall der Differenzdruck ausgenutzt.

In Fig. 6 ist eine Halteeinrichtung dargestellt, in der Bremsklinken 11 die Haltekraft übernehmen. Hier greifen Radialkolben 2 so an den Klinken 11 an, daß eine Hebelübersetzung entsteht, die die Anpreßkraft an das Rohr 5 verstärkt.

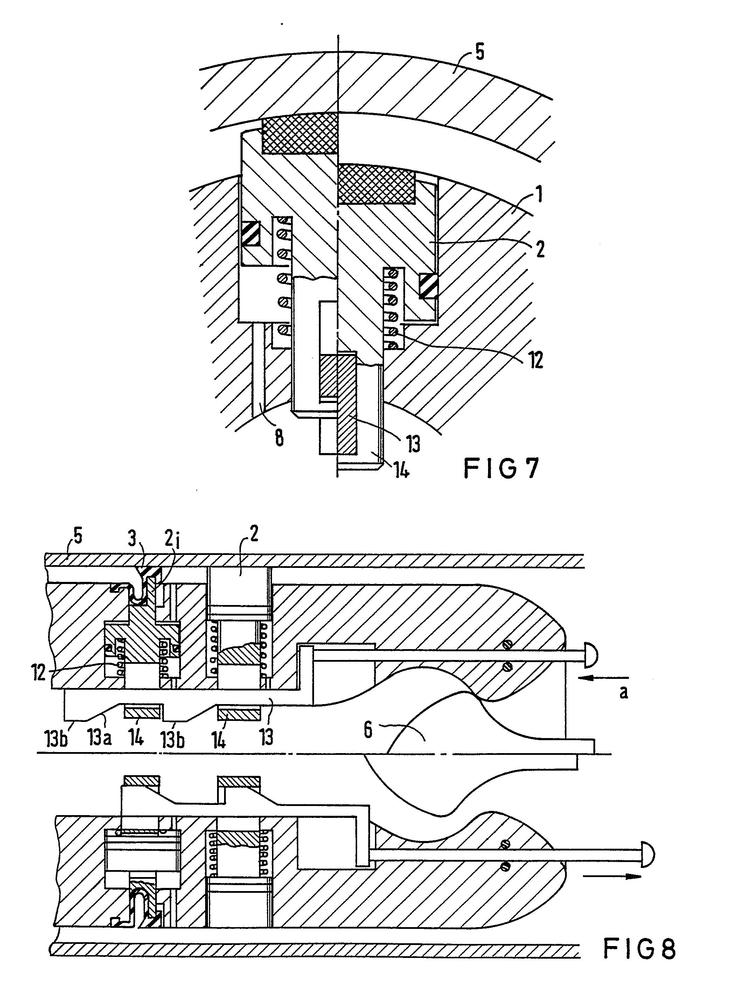

Da bei normaler Gasförderung der Ventilkegel 6 offen ist und dabei die Druckdifferenz aus wirtschaftlichen Gründen so klein wie möglich gehalten wird, ist in diesem Fall auch die Anpreßkraft der Halteelemente an die Rohrwand 5 niedrig. Es ist möglich, daß die Reibkräfte der Kolben 2 bzw. der Kolbendichtungen in den Zylindern so groß sind, daß sich die Kolben 2 bei diesem niedrigen Differenzdruck überhaupt nicht nach außen bewegen. In diesem Fall ist es zweckmäßig, die Austellbewegung der Kolben 2 z.B. mit Federn 12 zu unterstützen. Damit ist eine genügend große Erstanpreßkraft vorhanden, die verhindert, daß die Verschlußvorrichtung bei normaler Gasförderung wegrutschen kann (Fig. 7).

Da zum Ausbau des Absperrventils die Kolben 2 eingezogen werden müssen, empfiehlt es sich, eine Rückzugseinrichtung in die Verschlußvorrichtung zu integrieren, welche durch das Transportfahrzeug bedient werden kann. In Fig. 8 ist eine Rückzugseinrichtung dargestellt, mit der es möglich ist, mehrere Kolben 2 gleichzeitig zurückzuziehen, wenn diese bevorzugt in einer Reihe hintereinander angeordnet sind. Dabei greift, wie in Fig. 7 und 8 zu sehen ist, eine Betätigungsstange 13 in eine Kulisse 14 am Kolben ein. Wird sie in Pfeilrichtung a bewegt, werden die Kolben 2 freigegeben, die eingebauten Federn 12 drücken dann die Kolben 2 an die Rohrwand (obere Schnitthälfte der Fig. 8). Wird die Betätigungsstange 13 zurückgezogen, werden die Kolben 2 über die Keilflächen 13a der Stange 13 zwangsweise zurückgezogen und über die Flächen 13b gehalten (untere Schnitthälfte der Fig. 8).

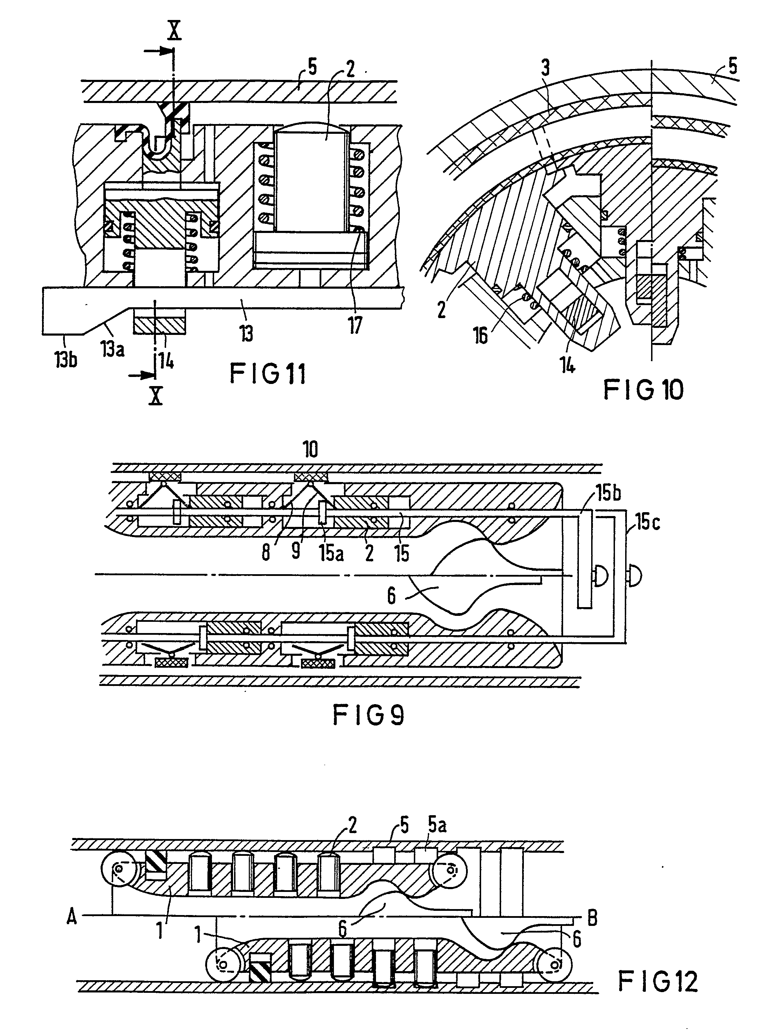

Auch die in Fig. 9 dargestellte Rückzugseinrichtung arbeitet nach demselben Prinzip. Hier sind alle in Reihe liegenden Längskolben 2 mit einer Rückzugsstange 15 so verbunden, daß sie sich nach vorne frei bewegen können, um den Bremsbacken 10 unterschiedlich große Anpreßwege zu gestatten. Der Rückzug aller Kolben 2 erfolgt dann jedoch formschlüssig durch Anschläge 15a auf der Rückzugstange 15, die abgedichtet durch die Kolben 2 hindurchgeführt ist. Da mehrere Kolbenreihen in Umfangsrichtung im Hohlzylinder 1 angeordnet sind, können alle Stangenenden 15b so zusammengefaßt werden, daß das Transportfahrzeug nur eine zentrale Bedienung durchzuführen braucht.

Auf ähnliche Weise kann auch die Ringdichtung 3 bedient werden (Fig. 8). In diesem Fall wird durch die Stangenbewegung für die Kolbenfreigabe auch die Ringdichtung 3 freigegeben, wobei gefederte, fächerartige Backen 2i die Ringdichtung 3 nach außen drücken. Die unteren Enden der Backen 2i sind als Kolben 2 ausgebildet, so daß ähnlich wie bei den äußeren Kolben, der Differenzdruck die Ringdichtung 3 verstärkt an das Rohr 5 anpreßt, wenn der Ventilkegel 6 geschlossen ist. Über die Keilfläche 13a der Betätigungsstange 13 kann die Ringdichtung 3 zwangsweise beim Rückzug der Kolben 2 ebenfalls eingezogen werden. An die Keilfläche 13a schließt sich auf der Betätigungsstange 13 je eine zur Achse parallele Fläche 13b an, die eine Arretierung der Ringdichtung 3 und der Kolben 2 in der eingezogenen Lage ermöglicht.

Eine besondere Art, die Veschlußvorrichtung in der Rohrleitung 5 zu fixieren, ergibt sich dann, wenn die kraftschlüssige Halterung der Kolben mit einer formschlüssigen Fixierung überlagert wird, wie in Fig. 12 dargestellt ist. Die Innenoberfläche des Rohres 5 weist Ausnehmungen 5a auf, in welche die durch Andrückfedern 12 oder durch den Differenzdruck vorgespannten Bremskolben 2 einschnappen, wenn der Kraftschluß nicht ausreicht, die Verschlußvorrichtung am Verrutschen zu hindern. Der dann entstehende Formschluß gewährleistet ein sicheres Halten. Ein Vorteil dabei ist, daß Streuungen im Reibungsbeiwert nach unten, eventuell infolge einer glitschigen Rohrwand, nicht zum weiten Wegwandern der Verschlußvorrichtung von der Betriebsposition führen kann. Ein weiterer Vorteil ist darin zu sehen, daß bei dieser Lösung im Gegensatz zur reinen formschlüssigen Verankerung, die Verschlußvorrichtung nicht unbedingt in eine genaue Position zu den Verankerungsnuten 5a im Rohr 5 gebracht werden muß, da die Verschlußvorrichtung im Betrieb in die als Formschlußnuten ausgebildeten Ausnehmungen rutscht (untere Schnitthälfte in Fig. 12).

Diese Überlagerung der Reibungshalterung durch z.B. als Formschlußnuten ausgebildeten Ausnehmungen 5a im Rohr 5 ist im Prinzip bei allen hier dargestellten Beispielen möglich.

Wie bereits erwähnt, kann die Erstanpreßung der Kolben 2 an die Rohrwand durch Federn so entscheidend verbessert werden, daß eine gesicherte Haltekraft das Wegwandern der Verschlußvorrichtung im Normalbetrieb verhindert. Diese Haltefunktion kann aber auch einer separaten Bremseinrichtung übertragen werden, welche z.B. durch das Transportfahrzeug so aktiviert wird, daß infolge Federvorspannung Bremsbacken an die Rohrwand angepreßt werden.

Zweckmäßig ist es jedoch, diese Haltefunktion der bereits vorhandenen Ringdichtung 3 zu übertragen, da diese bereits zum Zeitpunkt der Installation des Ventils durch das Transportfahrzeug in Dichtstellung gebracht wird. Der Erstanpreßdruck wird hier durch Federelemente erzeugt, ein Kolbensystem, ähnlich wie bei den Haupt-Haltekolben, trägt außerdem zur Selbstverstärkung des Anpreßdruckes bei.

In diesem Fall ist es möglich, in die Haupt-Haltekolben 2 statt ausstellender Federn Kolben-Rückzugfedern 17 einzusetzen (Fig. 10), was den Vorteil bringt, nicht unbedingt auf die mechanische Kolben-Rückzugseinrichtung 13, 14 bzw. 15 angewiesen zu sein, (Fig. 8 und 9), da die Kolben-Rückstellbewegung durch die Rückzugfedern 17 übernommen werden.

Allerdings muß dabei berücksichtigt werden, daß die Aktivierung dieser Kolben 2 zum Andrücken an das Rohr 5 erst bei einer größeren Druckdifferenz erfolgt. Die axiale Haltekraft der Ringdichtung 3 im Rohr 5 muß deshalb so erhöht werden, daß kein Verrutschen der Verschlußvorrichtung erfolgt, solange die Kolben 2 die Haltefunktion noch nicht übernommen haben.

**Ansprüche**

1. Vorrichtung zum Verschließen einer Rohrleitung (5), bei der ein in diese einsetzbarer Hohlzylinder (1) mit einer radial verstellbaren Ringdichtung (3) sowie mit radial verstellbaren Kolben (2) versehen ist und zur radialen Verstellung Betätigungsmittel vorgesehen sind, welche die Ringdichtung (3) und/oder Kolben (2) oder die Ringdichtung (3) und von den Kolben (2) betätigte Halteelemente (10, 11) entweder in eine ausgefahrene Stellung bringen, in der sie gegen die Innenwand der Rohrleitung (5) gedrückt werden und dadurch den Hohlzylinder (1) gegen eine axiale Bewegung sichern oder in eine eingezogene Lage bewegen, in der die Ringdichtung (3) und Kolben (2) oder Halteelemente (10, 11) von der Rohrleitung (5) gelöst sind.

2. Vorrichtung nach Anspruch 1, bei der in dem Hohlzylinder (1) eine Vielzahl von radial angeordneten Zylindern (1a) mit Kolben (2) vorgesehen ist, und das Innere des Hohlzylinders (1) für das Rohrleitungsmedium als Durchströmkanal (1b) ausgebildet ist, in dem ein Ventilkegel (6) angeordnet ist, der von einer Steuereinrichtung betätigbar ist oder in Abhängigkeit vom Überschreiten der betrieblichen Durchströmgeschwindigkeit selbsttätig - schließt.

3. Vorrichtung nach Anspruch 1 oder 2, bei der der Durchströmkanal (1b) mit den Zylindern (1a) verbunden ist und die Ringdichtung (3) im Ringspalt an der dem Druck zugewandten Seite (A) des Hohlzylinders (1) angeordnet ist, während sich der Ventilkegel (6) an der dem Druck abgewandten Seite (B) des Hohlzylinders (1) befindet.

4. Vorrichtung nach einem der vorhergehenden Ansprüche, bei der die Köpfe der Kolben (2) mit einer Oberfläche versehen sind, die einen hohen Reibwert aufweisen.

5. Vorrichtung nach einem der vorhergehenden Ansprüche, bei der die Kolben (2) als Stufenkolben (2a, 2b) ausgebildet sind.

6. Vorrichtung nach einem der vorhergehenden Ansprüche, bei der in die Kolben (2) mechanische Kraftverstärker eingebaut sind.

7. Vorrichtung nach einem der vorhergehenden Ansprüche, bei der die Kolben (2) in axial angeordneten Zylinder (4) angeordnet sind und die Kolben (2) auf ein aus zwei Hebeln (9a, 9b) gebildetes Übersetzungsgestänge drücken, das im Verbindungspunkt der beiden Hebel (9a, 9b) einen Bremsbacken (10) trägt.

8. Vorrichtung nach einem der vorhergehenden Ansprüche, bei der radial angeordnete Kolben (2) auf Bremsklinken (11) zur Einwirkung gebracht sind.

9. Vorrichtung nach einem der vorhergehenden Ansprüche, bei der die Austellbewegung der Kolben (2) durch Federn (12) unterstützt ist.

10. Vorrichtung nach einem der vorhergehenden Ansprüche, bei der die Kolben (2) mit einer Kulisse (14) versehen sind, durch die eine Betätigungsstange (13) hindurchgeführt ist, welche durch Verschieben der Betätigungsstange (13) mittels Keilflächen (13a) ein Zurückziehen der Kolben (2) und/oder der Ringdichtung (3) bewirken.

11. Vorrichtung nach einem der vorhergehenden Ansprüche, bei der die kraftschlüssige Halterung der Kolben (2) mit einer formschlüssigen Fixierung durch Eingriff der Kolben (2) in Ausnehmungen (5a) der Rohrleitung (5) überlagert ist.

12. Vorrichtung nach einem der vorhergehenden Ansprüche, bei der den Kolben (2) Rückzugsfedern (17) zugeordnet sind.

86 P 6024

FIG 1

FIG 2

FIG 3

0 240 851

86 P 6024

FIG 4

FIG 5

FIG 6

86 P 6024

FIG 7

FIG 8

FIG 11

FIG 10

FIG 9

FIG 12